# EUROPEAN PATENT APPLICATION

(11) **EP 1 892 221 A1**
(43) Date of publication of application: **27.02.2008**
(21) Application number: 07253143.7
(22) Date of filing: 10.08.2007
(51) Int. Cl.: C02F 1/00, B01D 27/10

(54) **Lid for a water filtration apparatus**

(30) Priority: 22.08.2006 GB 0616611
(71) Applicant: Global Innovation Venture Foundation Co., Ltd., Road Town, Tortola (VG)
(72) Inventor: Fedotov, Vladimir, 107082 Moscow (RU)
(74) Representative: Peel, James Peter

(57) **Abstract**

This invention relates to a lid for a water filtration apparatus comprising at least one filter and to the water filtration apparatus itself. The lid comprises a counter for recording the number of times it is operated and an indicator for showing information regarding the number of times the lid has been operated. The lid can form part of a water filtration apparatus that further comprises a receptacle for receiving the water to be filtered, a container for storing the filtered water, a filtering portion that connects the receptacle and container, the filtering portion comprising at least one filter, and an outlet from the container.

## Description

This invention relates to a lid for a water filtration apparatus, the apparatus comprising at least one filter, and to the water filtration apparatus itself.

Water filtration apparatus for household use are well known, such as the water filtration vessels sold by BRITA^{™} GmbH of Taunusstein, Germany. Such vessels commonly comprise a container having a handle and a spout, the container having a removable top. The container stores the water once it has been filtered and the spout provides an outlet for the filtered water. The top comprises a lid that opens into a receptacle that receives the water to be filtered and a filtering portion that comprises at least one filter and that connects the receptacle to the container. The filtering portion normally comprises a replaceable filtration cartridge that contains the means for filtering the water. The life of these cartridges is limited and it is therefore necessary for the user to replace them from time to time in order to maintain the required functionality of the filtration vessel.

In order to assist the user in determining when it is necessary to replace the filtration cartridge, means for indicating the service life of the cartridge have been developed. One known solution to this problem is to produce a water filtration apparatus having an integral timer. The timer resets when the filtration cartridge is replaced and then counts down a period of time, usually a month, before using display means to indicate to the user that the cartridge needs to be replaced. However, the problem with these devices is that they do not take into account the actual amount of usage of the water filtration apparatus. This can mean that the filtration cartridge may be replaced whilst it still has a significant service life remaining in the case of low usage, or long after its service life has ceased in the case of high usage.

In order to try to provide a more accurate method of indicating when it is necessary to replace the filtration cartridge in such vessels, US patent no. 5,900,138 in the name of Laica S.R.L. describes a water filtration vessel having an integral counting device for detecting and counting the number of times the lid of the vessel is removed. The number of times the lid is removed is then used to indicate when the filtration cartridge should be replaced. The counting device comprises a mechanical ratchet system having a wheel that indicates the number of times the lid has been removed. The method by which the wheel is advanced involves the engagement of the counting device housed in the lid with a projection on the portion of the vessel that houses the filtration cartridge.

A way of ameliorating these problems has been sought.

According to the present invention there is provided a lid for a water filtration apparatus which apparatus comprises at least one filter, the lid comprising:
(i) a counter for recording the number of times the lid has been operated, and
(ii) an indicator for showing information regarding the number of times the lid has been operated.

Advantages of the present invention include that the counter and indicator are both housed within the lid. As a result, the invention is more straightforward to use. The problem with prior art vessels such as those disclosed in the Laica patent is that the counting device and the projection are on different portions of the vessel. In all of the embodiments disclosed in the Laica patent, the counting device involves the interaction of these two separate parts. This means that they have to be mechanically engaged correctly every time the lid is replaced in order to activate the counting device, rendering them highly unreliable in day-to-day usage.

Preferably the lid is hinged. It is preferred that the counter comprises a movement detector to allow it to detect operation of the lid. A suitable movement detector is a tilt switch.

It is further preferred that the counter includes a calculator for determining the remaining service life of the at least one filter from the number of times the lid is operated such that the indicator may show the remaining service life of the at least one filter. Preferably the calculator comprises a microprocessor. Preferably the microprocessor calculates the remaining service life of the at least one filter by recording the number of lid operations, multiplying this by the volume of a receptacle that receives the water to be filtered and comparing this with a volume of water that can be effectively filtered by the at least one filter.

The microprocessor may additionally record the time elapsed since the at least one filter was last replaced. The lid may additionally comprises a communicator for informing the microprocessor that the at least one filter has been replaced. Preferably the communicator comprises a push-button.

Preferably the at least one filter is housed in a replaceable filtration cartridge.

Preferably the indicator comprises a display. More preferably the display is an LCD display.

The present invention also relates to water filtration apparatus comprising the lid of the invention and further comprising:
(i) a receptacle for receiving the water to be filtered,
(ii) a container for storing the filtered water,
(iii) a filtering portion connecting the receptacle and the container, the filtering portion comprising at least one filter, and
(iv) an outlet from the containing portion.

The present invention will be further described in greater detail by reference to the following Figures of the accompanying drawings which are not intended to limit the scope of the invention claimed, in which:
Figure 1 shows a water filtration apparatus of one embodiment of the invention where the lid opening into the receptacle that receives the water to be filtered is in the open position;
Figure 2 shows a water filtration apparatus of one embodiment of the invention where the lid opening into the receptacle that receives the water to be filtered is in the closed position;
Figure 3 shows a plan view of the lid of the water filtration apparatus according to one embodiment of the invention; and
Figure 4 shows a cut-away cross-section of the lid shown in Figure 3 along line A-A.

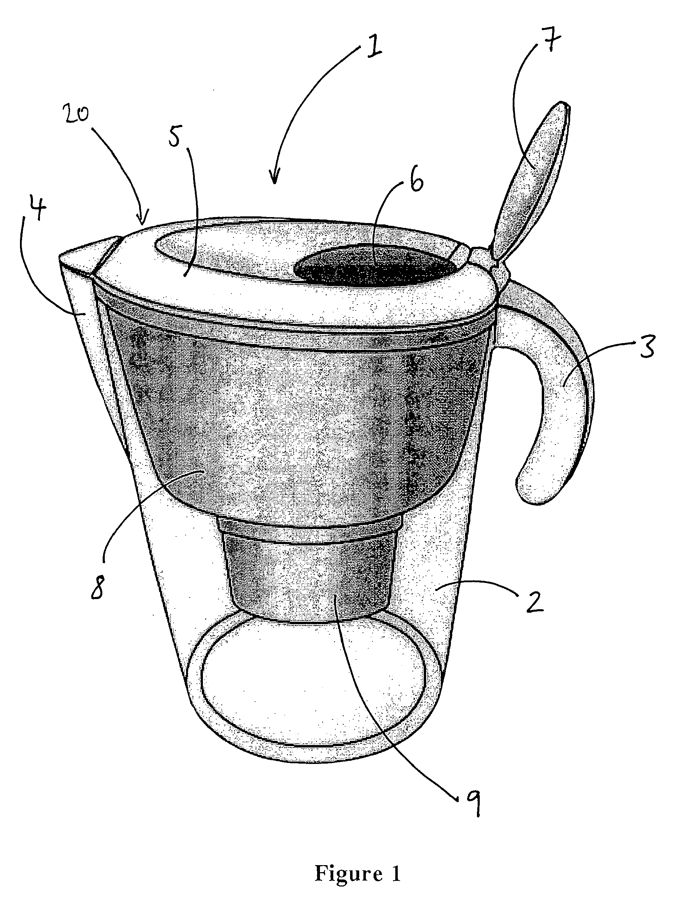

Figure 1 shows a water filtration vessel (1). Vessel (1) has a container (2) having a handle (3) and a spout (4). In the upper part of the container (2), there is a filtration housing (20). Filtration housing (20) has a filtering portion (9) for receiving a replaceable filtration cartridge (not shown), a receptacle (8) for receiving water to be filtered and is closed by a top (5). Top (5) has an opening (6) closable by a lid (7).

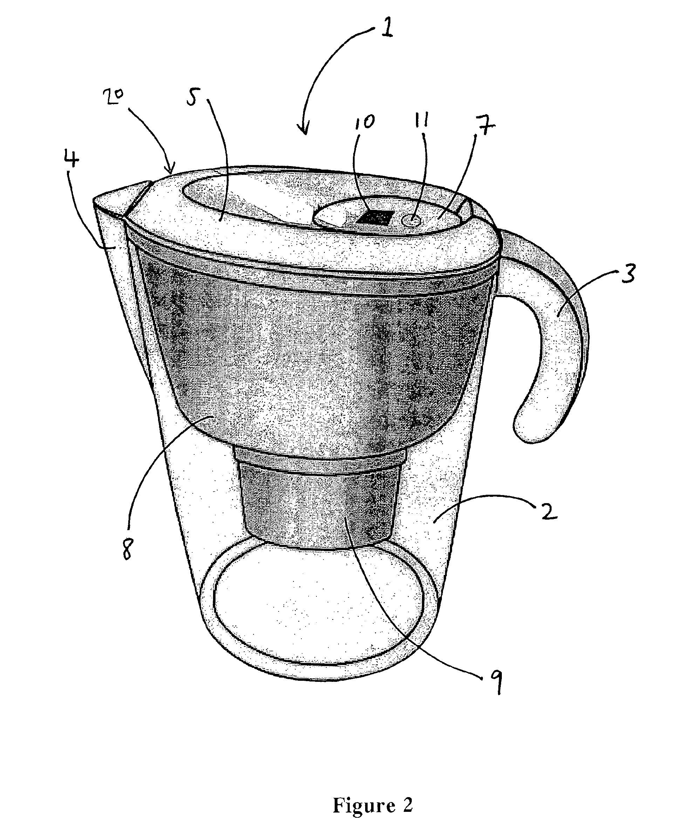

Figure 2 depicts the same view of the water filtration vessel (1), except that the opening (6) is closed by lid (7). Also shown is liquid crystal display (10) and start button (11).

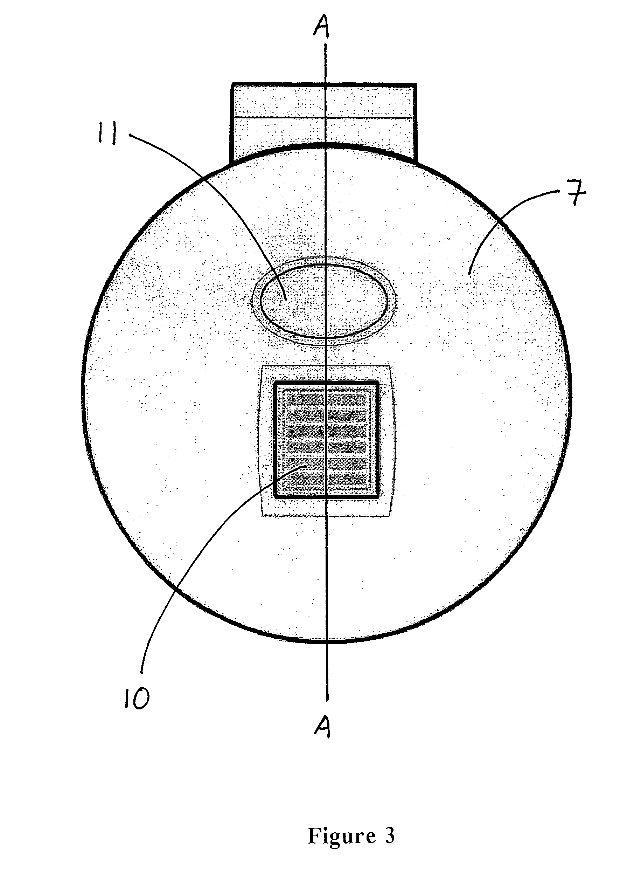

Figure 3 depicts a plan view of lid (7) and shows liquid crystal display (10) and start button (11).

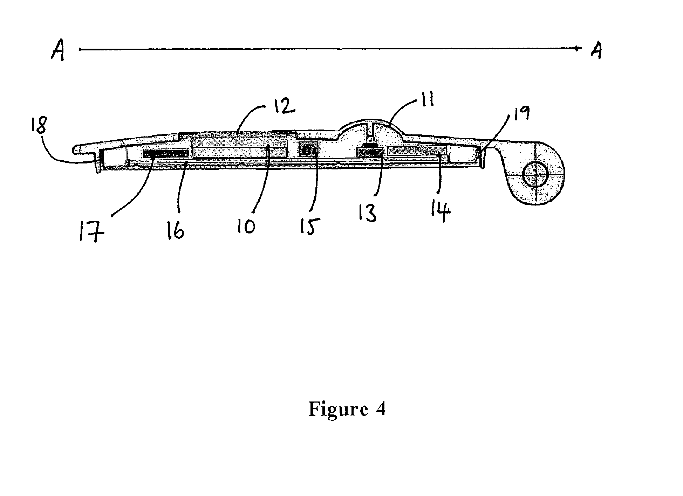

Figure 4 shows a cut-away cross-sectional view of the portion (7) of the lid (5) along line A-A shown in Figure 3. This figure depicts transparent window (12) that covers liquid crystal display (10). Transparent window (12) is preferable made of plastic. Also shown is start button (11), which is connected to push-button (13). Push-button (13) sits on printed circuit board (16) along with battery (14), tilt switch (15) and integrated circuit (17). These components are sealed inside lid (7) using ultrasonic welding (18, 19) to prevent ingress of water.

In use, the filtration cartridge housed in filtering portion (9) is replaced and the user actuates start button (11) on lid (7) of top (5). The lid (7) is then lifted to uncover opening (6), through which the water to be filtered is poured. The water is filled up to a predetermined level marked on the interior of receptacle (8). Once receptacle (8) is filled, lid (7) is lowered to close opening (6). The action of uncovering and then closing opening (6) with lid (7) activates tilt switch (15). The activation of tilt switch (15) is recorded by a microprocessor on integrated circuit (17), which uses this to calculate the remaining service life of the filter cartridge.

This information is then displayed on liquid crystal display (10). The time that has elapsed since the cartridge was replaced, i.e. the time since start button (11) has been actuated, may also be displayed.

There are many methods of displaying the remaining service life of the cartridge, for example by a bar chart or by the number of refills of the receptacle (8) that can be filtered. These components are powered by battery (14), which has a life of at least five years.

The water poured into receptacle (8) is filtered through the filtration cartridge housed in filtering portion (9) and into container (2), where it can be poured out through spout (4) by the user.

## Claims

1. A lid for a water filtration apparatus which apparatus comprises at least one filter, the lid comprising:
(iii) a counter for recording the number of times the lid has been operated, and
(i) an indicator for showing information regarding the number of times the lid has been operated.

2. A lid as claimed in claim 1, wherein the lid is hinged

3. A lid as claimed in claim 1 or claim 2, wherein the counter comprises a movement sensor which is preferably a tilt switch.

4. A lid as claimed in any one of the preceding claims, wherein the counter comprises a calculator for determining the remaining service life of the at least one filter from the number of times the lid is operated and wherein the indicator shows the remaining service life of the at least one filter.

5. A lid as claimed in claim 4, wherein the calculator determines the remaining service life of the at least one filter by recording the number of lid operations, multiplying this by the volume of a receptacle that receives the water to be filtered and comparing this with a volume of water that can be effectively filtered by the at least one filter.

6. A lid as claimed in either claim 4 or claim 5, wherein the counter additionally records the time elapsed since the at least one filter was last replaced.

7. A lid as claimed in claim 6, wherein the lid additionally comprises a communicator for informing the microprocessor that the at least one filter has been replaced.

8. A lid as claimed in claim 7, wherein the communicator comprises a push-button.

9. A lid as claimed in any one of the preceding claims, wherein the at least one filter is housed in a replaceable filtration cartridge.

10. A lid as claimed in any one of the preceding claims, wherein the indicator comprises a display.

11. A lid as claimed in claim 10, wherein the display is a liquid crystal display.

12. A water filtration apparatus comprising a lid as claimed in any one of the preceding claims, and further comprising:
(ii) a receptacle for receiving the water to be filtered,
(iii) a container for storing the filtered water,
(iv) a filtering portion connecting the receptacle and the container, the filtering portion comprising at least one filter, and
(v) an outlet from the containing portion.
